# EUROPEAN PATENT APPLICATION

(11) **EP 3 142 378 A1**
(43) Date of publication of application: **15.03.2017**
(21) Application number: 15788872.8
(22) Date of filing: 13.04.2015
(51) Int. Cl.: H04N 21/472

(54) **INTELLIGENT TERMINAL-BASED TWEENING INTERACTIVE ADVERTISEMENT IMPLANTATION METHOD AND DEVICE**

(30) Priority: 05.05.2014 CN 201410185948
(71) Applicant: Startimes Communication Network Technology Co. Ltd, Beijing 100085 (CN)
(72) Inventor: PANG, Yi, Beijing 100085 (CN); ZHANG, Liang, Beijing 100085 (CN); ZENG, Yixing, Beijing 100085 (CN); YAO, Hongwei, Beijing 100085 (CN); WEN, Jiangtao, Beijing 100085 (CN)
(74) Representative: Horak, Michael
(86) International application number: PCT/CN2015/076408
(87) International publication number: WO 2015/169139

(57) **Abstract**

The present disclosure provides an intelligent terminal-based tween interactive advertisement placement method and apparatus. The tween interactive advertisement placement method comprises: receiving advertisements issued by an advertisement management system through unidirectional DVB transport streams or bidirectional IP data streams; receiving a channel switching request input by a user; selecting an advertisement to be exhibited from the received advertisements according to a business rule; rendering the selected advertisement, and exhibiting the rendered advertisement on a screen. The present disclosure can improve the efficiency of the advertisement insertion when the intelligent terminal switches a channel, and solve the problem in the prior art that the advertisement exhibits a very small amount of information, and the user is easy to be averse to an advertisement that occurs at a fixed position for a long time.

## Description

### TECHNICAL FIELD

The present disclosure relates to the field of digital television and intelligent terminal, and particularly, to an intelligent terminal-based tween interactive advertisement placement method and apparatus.

### BACKGROUND

The conventional terminal (e.g., Linux terminal) usually adopts the simplest switching manner to switch the channel, i.e., directly turning to the real-time screen of a program in other channel. The inserted advertisement often occurs in various information bars and lists in a form of clickable small image. This channel change manner can best ensure the switching efficiency during the user's channel change, and such an advertisement form can ensure the advertisement stability. But in the practical application, the user is more tolerant to the duration of the channel change, while the narrow spaces in the information bars and lists largely limit the advertisement placement. As a result, the advertisement exhibits a very small amount of information, and the user is easy to be averse to an advertisement that occurs at a fixed position for a long time.

### SUMMARY OF THE DISCLOSURE

The disclosure provides an intelligent terminal-based tween interactive advertisement placement method and apparatus, so as to improve the efficiency of the advertisement insertion when the intelligent terminal such as an intelligent set top box, television or cell phone switches a channel.

In order to achieve the above objective, the present disclosure provides an intelligent terminal-based tween interactive advertisement placement method, comprising:
receiving advertisements issued by an advertisement management system through unidirectional DVB transport streams or bidirectional IP data streams;
receiving a channel switching request input by a user;
selecting an advertisement to be exhibited from the received advertisements according to a business rule;
rendering the selected advertisement, and exhibiting the rendered advertisement on a screen.

In one embodiment, the tween interactive advertisement placement method further comprises: determining an advertisement exhibition duration according to a content complexity of the advertisement and a shortest dwelling time required by an advertiser.

In one embodiment, the tween interactive advertisement placement method further comprises: real-timely monitoring whether an advertisement interaction request sent by a user is received within the advertisement exhibition duration, and if so, exhibiting a concrete content of the advertisement to the user.

In one embodiment, if the advertisement interaction request of the user is not monitored within the advertisement exhibition duration, a channel switching is performed according to the channel switching request.

In one embodiment, receiving advertisements issued by an advertisement management system through unidirectional DVB transport streams or bidirectional IP data streams comprises: pre-receiving the advertisements through a DVB or IP passage and storing the advertisements.

In one embodiment, receiving advertisements issued by an advertisement management system through unidirectional DVB transport streams or bidirectional IP data streams comprises: real-timely receiving the advertisement issued by the advertisement management system through an IP passage.

In one embodiment, rendering the advertisement comprises: rendering the advertisement through an HTML browser engine.

In one embodiment, rendering the advertisement comprises: parsing a self-defined advertisement descriptive language, and then performing drawing and rendering through a control library or a graphic library of an operating system.

In order to achieve the above objective, the present disclosure provides an intelligent terminal-based tween interactive advertisement placement apparatus, comprising:
an advertisement receiving unit configured to receive advertisements issued by an advertisement management system through unidirectional DVB transport streams or bidirectional IP data streams;
a request receiving unit configured to receive a channel switching request input by a user;
an advertisement selecting unit configured to select an advertisement to be exhibited from the received advertisements according to a business rule;
a rendering exhibition unit configured to render the selected advertisement, and exhibit the rendered advertisement on a screen.

In one embodiment, the tween interactive advertisement placement apparatus further comprises:
a duration determining unit configured to determine an advertisement exhibition duration according to a content complexity of the advertisement and a shortest dwelling time required by an advertiser.

In one embodiment, the tween interactive advertisement placement apparatus further comprises:
a request monitoring unit configured to real-timely monitor whether an advertisement interaction request sent by the user is received within the advertisement exhibition duration;
a concrete content exhibiting unit configured to exhibit a concrete content of the advertisement to the user;
a channel switching unit configured to perform a channel switching according to the channel switching request.

In one embodiment, the advertisement receiving unit is specifically configured to pre-receive the advertisements through a DVB or IP passage and store the advertisements.

In one embodiment, the advertisement receiving unit is specifically configured to real-timely receive the advertisements issued by the advertisement management system through an IP passage.

In one embodiment, the rendering exhibition unit is specifically configured to render the advertisement through an HTML browser engine.

In one embodiment, the rendering exhibition unit is specifically configured to parse a self-defined advertisement descriptive language, and then perform drawing and rendering through a control library or a graphic library of an operating system.

The embodiments of the present disclosure have the following beneficial effects: in the present disclosure, by receiving an advertisement through an IP passage, the pre-reception and the real-time reception of the advertisement can be combined to meet the humanized requirement, so that the advertisement exhibition is more diversified. The present disclosure has two rendering manners, and as compared with the existing OSD, the advertisement exhibition manner is more flexible. In addition, the present disclosure can improve the efficiency of the advertisement insertion when the intelligent terminal such as an intelligent set top box, television or cellular phone switches a channel, and solve the problem in the prior art that the advertisement exhibits a very small amount of information, and the user is easy to be averse to an advertisement that occurs at a fixed position for a long time.

### BRIEF DESCRIPTIONS OF THE DRAWINGS

In order to more clearly describe the technical solutions in the embodiments of the present disclosure or the prior art, the accompanying drawings to be used in the descriptions of the embodiments or the prior art will be briefly introduced as follows. Obviously, the accompanying drawings in the following descriptions just illustrate some embodiments of the present disclosure, and a person skilled in the art can obtain other accompanying drawings from them without paying any creative effort.
Fig. 1 is a flow diagram of an intelligent terminal-based tween interactive advertisement placement method in an embodiment of the present disclosure;
Fig. 2 is a schematic diagram of channel switching and advertisement details viewing in an embodiment of the present disclosure;
Fig. 3 is structural block diagram 1 of an intelligent terminal-based tween interactive advertisement placement apparatus in an embodiment of the present disclosure;
Fig. 4 is structural block diagram 2 of an intelligent terminal-based tween interactive advertisement placement apparatus in an embodiment of the present disclosure; and
Fig. 5 is structural block diagram 3 of an intelligent terminal-based tween interactive advertisement placement apparatus in an embodiment of the present disclosure.

### DETAILED DESCRIPTIONS

The technical solutions in the embodiments of the present disclosure will be clearly and completely described as follows with reference to accompanying drawings of the embodiments of the present disclosure. Obviously, those described herein are just parts of the embodiments of the present disclosure rather than all the embodiments. Based on the embodiments of the present disclosure, any other embodiment obtained by a person skilled in the art without paying any creative effort shall fall within the protection scope of the present disclosure.

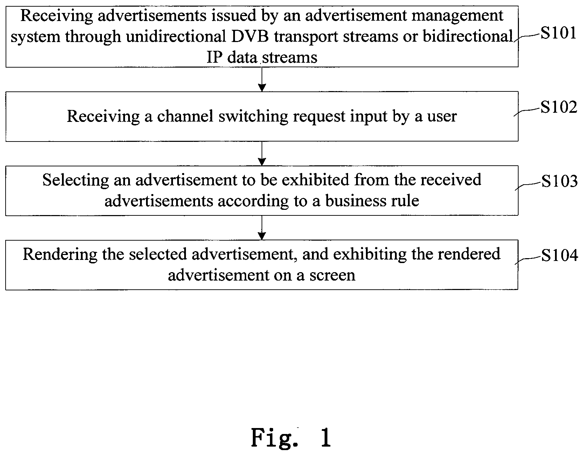

As illustrated in Fig. 1, an embodiment of the present disclosure provides an intelligent terminal-based tween interactive advertisement placement method, comprising:
step 101: receiving advertisements issued by an advertisement management system through unidirectional DVB transport streams or bidirectional IP data streams;
step 102: receiving a channel switching request input by a user;
step 103: selecting an advertisement to be exhibited from the received advertisements according to a business rule;
step 104: rendering the selected advertisement, and exhibiting the rendered advertisement on a screen.

To be noted, the tween interactive advertisement placement method in the embodiment of the present disclosure is executed by an intelligent terminal, which for example may be an intelligent set top box, an intelligent television, an intelligent cell phone, a Pad, etc. The terminal of the channel switching request input by the user may be, but not limited to, a channel change key on the remote controller or a control interface of the intelligent terminal.

As can be seen from Fig. 1, the intelligent terminal-based tween interactive advertisement placement method provided by the embodiment of the present disclosure can receive the advertisements issued by the advertisement management system through unidirectional DVB transport streams or bidirectional IP data streams, receive the channel switching request input by the user; select the advertisement to be exhibited from the received advertisements according to the business rule; and render the selected advertisement, and exhibit the rendered advertisement on the screen. The above tween interactive advertisement placement method can improve the efficiency of the advertisement insertion when the intelligent terminal switches a channel, and solve the problem in the prior art that the advertisement exhibits a very small amount of information, and the user is easy to be averse to an advertisement that occurs at a fixed position for a long time.

To be noted, the advertisements issued by the advertisement management system through unidirectional DVB transport streams or bidirectional IP data streams may include, but not limited to, texts, pictures, videos, links pointing to other advertisements, etc.

The advertisements received by the intelligent terminal contain the advertisement-related information, such as the context complexity (play duration) of the advertisement, the shortest dwell time required by the advertiser, etc., but not limited thereto.

When step 101 is specifically carried out, the advertisements may be pre-received through the DVB or IP passage and locally stored (in the intelligent terminal). The advertisement pre-reception manner is unrelated to the program currently played or to be played, and may be related to the time (e.g., the advertiser requires inserting an advertisement in a certain period of time) or district (e.g., different advertisements are suitable for different districts).

When step 101 is specifically carried out, the advertisements issued by the advertisement management system through the IP passage may also be received in real time (momentarily). This advertisement pre-reception manner is usually related to the user's state or the play content.

The user's state may include the user's identity, the user's program watching history, the user's gender, etc. For example, when the user's identity is a VIP user, the advertisements issued by the advertisement management system through the IP passage may be received in real time according to the situation of the VIP user. According to the user's program watching history, possibly favorite advertisements may be provided to the user in real time. For example, women liked advertisements, such as cosmetics, may be provided to the female user.

The play content includes the content currently played or to be played. For example, the program currently watched by the user is an automobile program, or what played in the channel to which the user switches is an automobile program, and the advertisement to be placed may be an automobile advertisement, so as to meet the user's requirement.

When step 102 is specifically carried out, in a case where the terminal of the channel switching request input by the user is an intelligent set top box or an intelligent television, the user may originate the channel switching request through a channel change key on the remote controller of the intelligent set top box or the intelligent television. In a case where the terminal of the channel switching request input by the user is an intelligent cell phone, a Pad, etc., the user may originate the channel switching request through a control interface (a keypad(including a virtual keypad) or touch screen) of the intelligent terminal. The intelligent terminal may receive the channel switching request input by the user through the channel change key or the control interface, and then perform step 301.

In step 102, the channel change is usually made through keys [←] and [→], and the present disclosure usually is not applied to the switching manner that inputs the channel number through the numeric key, mainly because the user inputs the channel number for switching with a specific intention, and has a low tolerance to the switching duration.

When step 103 is specifically carried out, if the user performs a channel switching, the intelligent terminal may select the advertisement to be exhibited according to the business rule. The business rule may be, but not limited to, judging whether a pre-received advertisement or a real-timely received advertisement shall be played. For example, an advertisement for a period of time is bought out by an advertiser, and the pre-received advertisement shall be played according to the business rule. In that case, only the advertisement bought out by the advertiser can be played in that period of time, and the advertisement bought out by the advertiser is pre-received through the DVB or IP passage.

After being selected, the advertisement to be pre- received shall be rendered in step 104 before being placed. In step 104, the advertisement selected to be placed may be rendered in many manners. For example, the advertisement may be rendered through an HTML browser engine, or the self-defined advertisement descriptive language may be parsed at first, and then drawing and rendering may be performed through a control library or a graphic library of the operating system.

In the prior art, the advertisement to be placed is usually rendered in an OSD manner. But this manner leads to an inflexible exhibition and is not easily acceptable to the user. Through the above two rendering methods of the present disclosure, the advertisement exhibition may be more flexible relative to the prior art.

The animation or other effect contained in the tween interactive advertisement will not be limited by the embodiments, and any manner of non-real-time live screen occurring during the channel switching falls within the tween screen range of the tween interactive advertisement of the present disclosure. For example, during the channel switching, a previous screen fades out, the tween screen fades in with a sliding effect and fades out after dwelling for several seconds, and subsequently, an adjacent channel screen fades in.

In addition, the frequency and rule of the advertisement occurrence in the tween screen (several advertisements may occur) are not limited by the embodiments, and an advertisement page occurring in any rule or irregularly in the tween screen is covered by the present disclosure.

During the advertisement placement, the duration of the advertisement to be placed shall be set. In the present disclosure, the advertisement exhibition duration (the dwelling duration of the tween interactive advertisement) may be set according to the complexity (the actual playing duration of the advertisement) of the protection content in the received advertisement and/or the shortest dwelling time required by the advertiser, etc. When being displayed on a screen, the placed advertisement may dwell for the set advertisement exhibition duration. The dwelling duration of the tween interactive advertisement is not limited by the embodiments, and any advertisement page dwelling duration is covered by the design of the present disclosure.

During the implementation of the present disclosure, when the placed advertisement is within the advertisement exhibition duration, the user may send to the intelligent terminal a request for watching the concrete content (exhibition details) of the advertisement (i.e., an advertisement interaction request), through the channel change key or the control interface of the intelligent terminal.

During the advertisement exhibition duration, the intelligent terminal may real-timely monitor whether the advertisement interaction request sent by the user is received; if so, exhibit the details of the advertisement to the user; and if not, switch to a channel wanted to be watched by the user according to the channel switching request of the user.

The manner for the user to perform an advertisement interaction is not limited by the embodiments, and any manner in which the user can control the advertisement page through a remote controller or a control interface of the intelligent terminal (e.g., exhibiting the details by clicking) shall fall within the range of the interactive advertisement of the present disclosure.

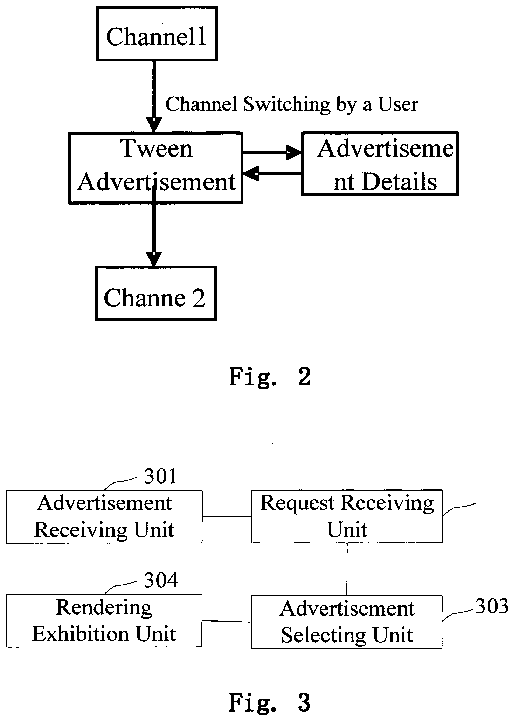

Fig. 2 illustrates a specific embodiment of the present disclosure. When the user watches channel 1 and switches the channel by pressing the channel change key (or through the control interface), there occurs a tween screen that contains an advertisement. Within the advertisement exhibition duration, the user can view the details of the advertisement by clicking the interaction element of the advertisement, and when he returns after the viewing, the screen is immediately switched to the real-time program of the adjacent channel. If the user does not view the details of the advertisement, the screen is also immediately switched to the real-time program of adjacent channel 2 when the advertisement exhibition time exceeds the advertisement exhibition duration.

As illustrated in Fig. 3, an embodiment of the present disclosure provides an intelligent terminal-based tween interactive advertisement placement apparatus, which comprises an advertisement receiving unit 301, a request receiving unit 302, an advertisement selecting unit 303 and a rendering exhibition unit 304.

The advertisement receiving unit 301 may be configured to receive advertisements issued by an advertisement management system through unidirectional DVB transport streams or bidirectional IP data streams.

In one embodiment, the advertisement receiving unit 301 may pre-receive the advertisements through the DVB or IP passage and store the advertisements.

In one embodiment, the advertisement receiving unit 301 may receive the advertisements issued by the advertisement management system through the IP passage in real time.

In a case where the terminal of the channel switching request input by the user is an intelligent set top box or an intelligent television, the user may originate the channel switching request through a channel change key on the remote controller of the intelligent set top box or the intelligent television. In a case where the terminal of the channel switching request input by the user is an intelligent cell phone, a Pad, etc., the user may originate the channel switching request through a control interface (a keypad(including a virtual keypad) or touch screen) of the intelligent terminal. The request receiving unit 302 may receive the channel switching request input by the user.

The advertisement selecting unit 303 may select the advertisement to be exhibited from the received advertisements according to the business rule. When the user performs a channel switching, the intelligent terminal may select the advertisement to be exhibited according to the business rule. The business rule may be, but not limited to, judging whether a pre-received advertisement or a real-timely received advertisement shall be played. For example, an advertisement for a period of time is bought out by an advertiser, and the pre-received advertisement shall be played according to the business rule. In that case, only the advertisement bought out by the advertiser can be played in that period of time, and the advertisement bought out by the advertiser is pre-received through the DVB or IP passage.

The rendering exhibition unit 304 may render the selected advertisement, and exhibit the rendered advertisement on a screen.

The advertisement may be rendered in many manners. In one embodiment, the rendering exhibition unit 304 may render the advertisement through an HTML browser engine. In another embodiment, the rendering exhibition unit 304 may parse self-defined advertisement descriptive language at first, and then perform drawing and rendering through a control library or a graphic library of the operating system.

In the prior art, the advertisement to be placed is usually rendered in an OSD manner. But this manner leads to an inflexible exhibition and is not easily acceptable to the user. Through the above two rendering methods of the present disclosure, the advertisement exhibition may be more flexible relative to the prior art.

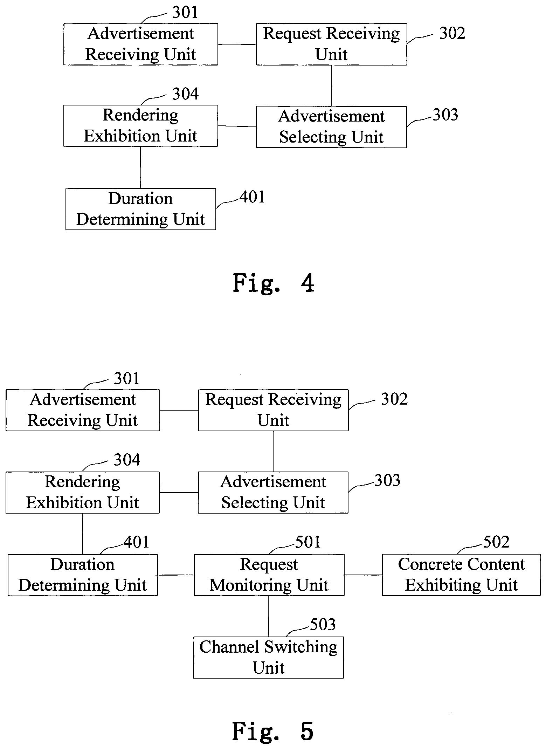

In one embodiment, as illustrated in Fig. 4, the tween interactive advertisement placement apparatus may further comprise: a duration determining unit 401 which can determine an advertisement exhibition duration according to a content complexity of the advertisement and a shortest dwelling time required by an advertiser.

In one embodiment, as illustrated in Fig. 5, the tween interactive advertisement placement apparatus further comprises a request monitoring unit 501, and a concrete content exhibiting unit 502 and a channel switching unit 503.

The request monitoring unit 501 may real-timely monitor whether the advertisement interaction request sent by the user is received within the advertisement exhibition duration.

If it is real-timely monitored that the advertisement interaction request sent by the user is received within the advertisement exhibition duration, the concrete content of the advertisement may be exhibited to the user through the concrete content exhibiting unit 502.

If it is real-timely monitored that the advertisement interaction request sent by the user is not received within the advertisement exhibition duration, the channel switching unit 503 may perform a channel switching according to the channel switching request when the advertisement exhibition time reaches the advertisement exhibition duration.

As can be seen from the above embodiments, in the present disclosure, by receiving an advertisement through an IP passage, the pre-reception and the real-time reception of the advertisement can be combined to meet the humanized requirement, so that the advertisement exhibition is more diversified. The present disclosure has two rendering manners, and as compared with the existing OSD, the advertisement exhibition manner is more flexible. In addition, the present disclosure can improve the efficiency of the advertisement insertion when the intelligent terminal such as an intelligent set top box, television or cellular phone switches a channel, and solve the problem in the prior art that the advertisement exhibits a very small amount of information, and the user is easy to be averse to an advertisement that occurs at a fixed position for a long time.

A person skilled in the art shall understand that the embodiments of the present disclosure can be provided as a method, a system or a computer program product. Therefore, the present disclosure can take the form of a full hardware embodiment, a full software embodiment, or an embodiment with combination of software and hardware aspects. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flow diagram and/or block diagram of the method, device (system) and computer program product according to the embodiments of the present disclosure. It shall be understood that each flow and/or block in the flow diagram and/or block diagram and a combination of the flow and/or block in the flow diagram and/or block diagram can be realized by the computer program instructions. These computer program instructions can be provided to a general computer, a dedicated computer, an embedded processor or a processor of other programmable data processing device to generate a machine, such that the instructions performed by the computer or the processor of other programmable data processing devices generate the device for implementing the function designated in one flow or a plurality of flows in the flow diagram and/or a block or a plurality of blocks in the block diagram.

These computer program instructions can also be stored in a computer readable memory capable of directing the computer or other programmable data processing devices to operate in a specific manner, such that the instructions stored in the computer readable memory generate a manufactured article including an instruction device that implements the function(s) designated in one flow or a plurality of flows in the flow diagram and/or a block or a plurality of blocks in the block diagram.

The principle and the implementation of the present disclosure are described through the specific embodiments, which are only used to help understanding the method and the core idea of the present disclosure. Meanwhile, a person skilled in the art may change the implementation and the application range according to the idea of the present disclosure. In conclusion, this specification shall not be construed as any limitation to the present disclosure.

## Claims

1. An intelligent terminal-based tween interactive advertisement placement method, comprising:
receiving advertisements issued by an advertisement management system through unidirectional DVB transport streams or bidirectional IP data streams;
receiving a channel switching request input by a user;
selecting an advertisement to be exhibited from the received advertisements according to a business rule;
rendering the selected advertisement, and exhibiting the rendered advertisement on a screen.

2. The tween interactive advertisement placement method according to claim 1, further comprising: determining an advertisement exhibition duration according to a content complexity of the advertisement and a shortest dwelling time required by an advertiser.

3. The tween interactive advertisement placement method according to claim 2, further comprising: real-timely monitoring whether an advertisement interaction request sent by the user is received within the advertisement exhibition duration, and if so, exhibiting a concrete content of the advertisement to the user.

4. The tween interactive advertisement placement method according to claim 3, wherein if the advertisement interaction request of the user is not monitored within the advertisement exhibition duration, a channel switching is performed according to the channel switching request.

5. The tween interactive advertisement placement method according to claim 1, wherein receiving advertisements issued by an advertisement management system through unidirectional DVB transport streams or bidirectional IP data streams comprises: pre-receiving the advertisements through a DVB or IP passage and storing the advertisements.

6. The tween interactive advertisement placement method according to claim 1, wherein receiving advertisements issued by an advertisement management system through unidirectional DVB transport streams or bidirectional IP data streams comprises: real-timely receiving the advertisement issued by the advertisement management system through an IP passage.

7. The tween interactive advertisement placement method according to claim 1, wherein rendering the advertisement comprises: rendering the advertisement through the HTML browser engine.

8. The tween interactive advertisement placement method according to claim 1, wherein rendering the advertisement comprises: parsing the self-defined advertisement descriptive language, and then performing drawing and rendering through the control library or the graphic library of the operating system.

9. An intelligent terminal-based tween interactive advertisement placement apparatus, comprising:
an advertisement receiving unit configured to receive advertisements issued by an advertisement management system through unidirectional DVB transport streams or bidirectional IP data streams;
a request receiving unit configured to receive a channel switching request input by a user;
an advertisement selecting unit configured to select an advertisement to be exhibited from the received advertisements according to a business rule;
a rendering exhibition unit configured to render the selected advertisement; and exhibit the rendered advertisement on a screen.

10. The tween interactive advertisement placement apparatus according to claim 9, further comprising:
a duration determining unit configured to determine an advertisement exhibition duration according to a content complexity of the advertisement and a shortest dwelling time required by an advertiser.

11. The tween interactive advertisement placement apparatus according to claim 10, further comprising:
a request monitoring unit configured to real-timely monitor whether an advertisement interaction request sent by the user is received within the advertisement exhibition duration;
a concrete content exhibiting unit configured to exhibit a concrete content of the advertisement to the user;
a channel switching unit configured to perform a channel switching according to the channel switching request.

12. The tween interactive advertisement placement apparatus according to claim 9, wherein the advertisement receiving unit is specifically configured to pre-receive the advertisements through a DVB or IP passage and store the advertisements.

13. The tween interactive advertisement placement apparatus according to claim 9, wherein the advertisement receiving unit is specifically configured to real-timely receive the advertisements issued by the advertisement management system through an IP passage.

14. The tween interactive advertisement placement apparatus according to claim 9, wherein the rendering exhibition unit is specifically configured to render the advertisement through the HTML browser engine.

15. The tween interactive advertisement placement apparatus according to claim 9, wherein the rendering exhibition unit is specifically configured to parse the self-defined advertisement descriptive language, and then perform drawing and rendering through the control library or the graphic library of the operating system.
